(19) Europäisches Patentamt
European Patent Office
Office européen des brevets

(11) **EP 3 960 984 B1**

(12) **EUROPÄISCHE PATENTSCHRIFT**

(45) Veröffentlichungstag und Bekanntmachung des Hinweises auf die Patenterteilung:
**01.10.2025 Patentblatt 2025/40**

(21) Anmeldenummer: **20192639.1**

(22) Anmeldetag: **25.08.2020**

(51) Internationale Patentklassifikation (IPC):
**F01C 21/02** *(2006.01)* **F04C 18/12** *(2006.01)*
**F16C 19/00** *(2006.01)*

(52) Gemeinsame Patentklassifikation (CPC):
**F04C 18/12; F01C 21/02; F16C 19/163;**
**F16C 19/361; F16C 19/546; F16C 35/061;**
**F16C 35/063; F16C 35/067;** F04C 2230/60;
F04C 2240/52

(54) **DREHKOLBENMASCHINE SOWIE VERFAHREN ZUR MONTAGE**

ROTARY PISTON MACHINE AND ASSEMBLY METHOD

MOTEUR À PISTON ROTATIF AINSI QUE PROCÉDÉ DE MONTAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.03.2022 Patentblatt 2022/09**

(73) Patentinhaber: **Aerzener Maschinenfabrik GmbH**
**31855 Aerzen (DE)**

(72) Erfinder:
• **Reicherdt, Ivan**
**31855 Aerzen (DE)**
• **Blome, Stefan**
**31855 Aerzen (DE)**
• **Dziadek, Philipp**
**31855 Aerzen (DE)**

(74) Vertreter: **Hoffmann Eitle**
**Patent- und Rechtsanwälte PartmbB**
**Arabellastraße 30**
**81925 München (DE)**

(56) Entgegenhaltungen:
WO-A1-2019/186374   JP-A- H0 579 514
US-A- 4 465 446      US-A- 4 730 995
US-A- 6 048 101

## Beschreibung

### Technisches Gebiet

Die Erfindung betrifft eine zweiwellige Drehkolbenmaschine sowie ein Verfahren zur Montage der Festlagerung eines Rotors einer zweiwelligen Drehkolbenmaschine.

Eine solche Drehkolbenmaschine umfasst üblicherweise zwei in einem Gehäuse über Wellen und Lageranordnungen gelagerte Rotoren, die miteinander gegenläufig kämmen, um zusammen mit dem Gehäuse einen Förderraum zu definieren. Eine der Lageranordnungen jeder Welle ist in axialer Richtung als Festlageranordnung ausgebildet. Eine solche Drehkolbenmaschine, als Schraubenverdichter ausgebildet, ist aus den Druckschriften US 4 465 446 und US 4 730 995 bekannt.

### Stand der Technik

Drehkolbenmaschinen, insbesondere Schraubenverdichter und Drehkolbengebläse der Bauart Roots, aber auch Drehkolbenexpansionsmaschinen, werden üblicherweise bis zu Differenzdrücken von etwa 15 bar und bis zu Drehzahlen von etwa 20.000 1/min vornehmlich wälzgelagert. Die durch den Verdichtungs- bzw. Entspannungsprozess auftretenden hohen radialen Kräfte werden beispielsweise durch Zylinderrollenlager aufgenommen. Bei verwundenen Rotoren (z.B. bei Schraubenverdichtern) bildet sich auch in axialer Richtung ein Druckgradient aus, wodurch zudem axiale Kräfte in den Lagern auftreten. Axiale Kräfte, welche aus diesem Druckgradienten resultieren, werden üblicherweise als positive Axialkräfte bezeichnet. Kräfte in der Gegenrichtung, welche zum Beispiel bei drucklosem Betrieb oder bei Startvorgängen entstehen können, werden als negative Axialkräfte bezeichnet. Derartige Axialkräfte können beispielsweise auch von auf den Rotorwellen montierten schrägverzahnten Zahnrädern verursacht werden.

In diesem Zusammenhang ist die EP 1 845 265 A1 bekannt, die eine trockenlaufende Drehkolbenmaschine betrifft. Die Drehkolbenmaschine umfasst mindestens zwei in einem Gehäuse über Wellen und Wälzlageranordnungen gelagerte Drehkolben, die miteinander gegenläufig kämmen, um einen Förderraum zu definieren, wobei die Wellen über schrägverzahnte Steuerräder betrieblich miteinander gekoppelt sind, und eine der Wälzlageranordnungen mindestens einer Welle in axialer Richtung als Festlageranordnung ausgebildet ist. Die Festlageranordnung weist ein einreihiges Schrägkugellager und ein Zylinderrollenlager auf. Ferner ist es vorgesehen, dass das Zylinderrollenlager einen ersten Lagerring mit zwei Borden und einen zweiten Lagerring mit einem Bord aufweist. Derartige Zylinderrollenlager werden üblicherweise als "NJ-Lager" bezeichnet.

Eine solche Anordnung eignet sich zur Aufnahme sowohl positiver als auch negativer Axialkräfte. Da die Festlageranordnung als separate Einheit vormontiert sein kann, ist es möglich, diese ohne weitere Spieleinstellungen in einem einzigen Arbeitsgang in die entsprechende Drehkolbenmaschine einzubauen.

Allerdings hat sich gezeigt, dass das minimal erreichbare Spiel von mehreren Fertigungstoleranzen abhängig und daher begrenzt ist. Ferner ist es im Fall einer fehlerhaften Montage nötig, das vorab gepaarte Lager vollständig zu entfernen. Dies ist üblicherweise nicht zerstörungsfrei möglich.

### Gegenstand der Erfindung

Ein Ziel der Erfindung ist es, eine Drehkolbenmaschine sowie ein Verfahren zur Montage einer Festlagerung eines Rotors einer Drehkolbenmaschine bereitzustellen, bei dem bzw. bei der eine axiale Spieleinstellung für Festlageranordnungen von Drehkolbenmaschinen erleichtert wird. Außerdem sollen bei Einhaltung der im Betrieb einer Drehkolbenmaschine geforderten Eigenschaften eine einfache Konstruktion ermöglicht und dabei eine exakte Einstellung sichergestellt werden. Eine Einstellung kann dabei die Einstellung der wirkungsgradbestimmenden druckseitigen Axialspalte der Rotoren und/oder die Einstellung des Axiallagerspiels beinhalten.

Gemäß Anspruch 1 wird eine Drehkolbenmaschine und gemäß Anspruch 9 ein Verfahren bereitgestellt. Bevorzugte Ausführungsformen finden sich in den abhängigen Ansprüchen und/oder in der nachfolgenden Beschreibung. Die Drehkolbenmaschine ist bevorzugt eingerichtet, anhand des zuvor genannten Verfahrens oder einer dessen Ausführungsformen montiert zu werden.

Bei der in diesem Zusammenhang genannten zweiwelligen Drehkolbenmaschine handelt es sich insbesondere um eine Drehkolbenmaschine mit außerhalb des Förderraumes angeordnetem Getriebe zur Synchronisation der beiden Rotoren. Üblicherweise werden schrägverzahnte Zahnräder direkt auf den Wellen der Rotoren angebracht. Die Schrägverzahnung ist eine mögliche Ursache für das Auftreten negativer Axialkräfte.

Insbesondere ist die vorliegende Erfindung vorteilhaft, wenn Negativkräfte und Positivkräfte von getrennten Lagern aufgenommen werden sollen. In diesem Fall müssen Negativ- und Positivlager nicht in direkter Nachbarschaft auf der Welle platziert werden.

Die erfindungsgemäße Drehkolbenmaschine umfasst: zwei in einem Gehäuse gegenläufig kämmende, für einen berührungsfreien Lauf angeordnete Rotoren, wobei die Rotoren jeweils eine mittels Wälzlageranordnungen gelagerte Welle aufweisen, von denen eine Wälzlageranordnungen als Festlageranordnung ausgebildet ist. Das Gehäuse weist einen Innenraum zur Aufnahme eines profilierten Bereichs der Rotoren auf. Zumindest eine der Festlageranordnungen umfasst ein erstes Lager und ein zweites Lager, wobei das erste Lager eingerichtet ist, zumindest Radialkräfte und negative Axialkräfte aufzunehmen, und das zweite Lager eingerichtet ist, zumindest positive Axialkräfte aufzunehmen. Ferner ist es vorgesehen, dass ein Außenring des ersten Lagers in Richtung des profilierten Bereiches des Rotors im Gehäuse axial verschiebbar ist. Bei einer Drehkolbenmaschine kann auch eine Festlageranordnung der zweiten Welle wie die genannte Festlageranordnung ausgebildet sein.

"Axial verschiebbar" meint in diesem Zusammenhang, dass die Position des Außenrings des ersten Lagers in Richtung des profilierten Bereiches des Rotors nicht durch einen festen Anschlag, wie zum Beispiel eine Gehäusekante, definiert wird, sondern durch die aus der Passung des Außenrings resultierenden Kräfte und/oder durch ein an der in Richtung des profilierten Bereichs des Rotors weisenden Seite des Außenrings angeordneten elastisches Elements, wie zum Beispiel einer Wellfeder, in Position gehalten wird.

Bei sogenannten "trockenlaufenden" Drehkolbenmaschinen haben die profilierten Bereiche der Rotoren aufgrund der Synchronisation der Rotoren durch ein außerhalb des Förderraums angeordnetes Synchronisationsgetriebe untereinander keinen Kontakt. Die Rotoren der Drehkolbenmaschine sind somit für einen berührungsfreien Lauf angeordnet.

Da die Rotoren mittels eines Synchronisationsgetriebes keine Berührung miteinander haben, ist im Bereich der Rotoren keine Schmierung erforderlich, sodass dieser Bereich ölfrei gehalten werden kann und somit Verunreinigungen der Druckluft mit Öl vermieden werden.

Die Ausgestaltung als trockenlaufende Drehkolbenmaschine schließt allerdings nicht aus, dass dennoch flüssige Medien eingespritzt werden, um z.B. eine Kühlung während des Betriebs zu erreichen.

Die beschriebene Anordnung der Drehkolbenmaschine hat den Vorteil, dass die Montage eines Rotors der Drehkolbenmaschine vereinfacht wird. Auch ist es möglich, Korrekturen an der Festlagerung vorzunehmen, ohne die gesamte Festlageranordnung demontieren zu müssen.

In einer Ausführungsform ist es vorgesehen, dass lediglich Außenringe des ersten und zweiten Lagers gegeneinander abgestützt sind. Innenringe des ersten und zweiten Lagers hingegen sind nicht gegeneinander abgestützt.

Ferner kann die Drehkolbenmaschine zumindest eine erste Passscheibe zur Definition einer Passscheibenbreite umfassen, wobei die Passscheibenbreite ($X_{Passscheibe}$) derart gewählt ist, dass eine Position des Außenrings des ersten Lagers eingestellt ist. Eine Passscheibe kann dabei eine Scheibe mit einem bestimmten Maß oder ein angepasster Distanzring oder eine Kombination solcher Elemente sein.

Es ist bevorzugt, dass die zumindest eine erste Passscheibe an der dem Förderraum abgewandten Seite des Außenrings des ersten Lagers anliegt, oder die zumindest eine erste Passscheibe einen Distanzring, der mit einem Außenring des ersten Lagers in Kontakt steht, gegenüber dem Gehäuse abstützt.

Ferner kann es vorgesehen sein, dass ein Distanzring gegen die zumindest eine erste Passscheibe geschoben ist.

Gemäß einer bestimmten Ausführungsform ist zumindest eine Passscheibe zwischen Innenringen des ersten Lagers und des zweiten Lagers angeordnet. Somit werden die Lager, ggf. zusätzlich zu den Außenringen, über die Innenringe eingestellt.

Bevorzugt ist es vorgesehen, dass eine Mutter an der Welle aufgebracht ist, um die Lageranordnung auf der Welle axial zu fixieren. Das Festziehen der Mutter bewirkt, dass sich die eingestellte Lagerluft zwischen dem ersten Lager und dem zweiten Lager ergibt. Auch diese Maßnahme trägt zu einer vereinfachten Montage bei.

Bei dem ersten Lager kann es sich um ein NJ-Lager oder ein Schrägkugellager handeln. Das zweite Lager kann ein Schrägkugellager oder eine Kombination von mehreren Schrägkugellagern in Tandem-Anordnung sein. In Tandem-Anordnung können besonders hohe Positivkräfte aufgenommen werden. Diese Lagertypen haben sich an der Festlagerseite als besonders geeignet erwiesen. Generell erlaubt die Erfindung eine große Variantenvielfalt von Lagerkombinationen. Ein vorheriges Paaren mit Einstellung der Lagerluft ist dabei jedoch nicht notwendig, so dass Kostenvorteile erreicht werden können.

Das erste Lager ist bevorzugt näher am profilierten Bereich des Rotors angeordnet als das zweite Lager, sodass die Radialkräfte und negativen Axialkräfte an einer näher zum profilierten Bereich gelegenen Position aufgenommen werden.

Gemäß einer weiteren Ausführungsform ist es vorgesehen, dass sich die Außenringe des ersten und zweiten Lagers, bevorzugt mittels eines oder mehrerer Zwischenelemente, axial in Kontakt befinden, und sich Innenringe des ersten und zweiten Lagers nicht axial in Kontakt befinden oder über mindestens ein elastisches Zwischenelement, insbesondere eine Wellfeder, in Kontakt befinden.

Bevorzugt können sich die Außenringe des ersten und zweiten Lagers direkt oder indirekt derart axial in Kontakt befinden, dass Kräfte zwischen den Außenringen übertragen werden können. Ferner können sich die Innenringe des ersten und zweiten Lagers axial nicht in Kontakt befinden oder mittels mindestens eines elastischen Zwischenelements, insbesondere eine Wellfeder, in Kontakt befinden. Zwischen den Innenringen werden Kräfte somit lediglich über die Wälzkörper des ersten und zweiten Lagers übertragen.

Ferner wird ein Verfahren bereitgestellt. Das Verfahren umfasst die Schritte: Anbringen eines ersten Lagers an einer Welle des Rotors, wobei das erste Lager in eine definierte Position, insbesondere gegen einen Absatz der Welle, geschoben wird, wobei das erste Lager eingerichtet ist, Radialkräfte sowie negative Axialkräfte aufzunehmen, und ein Außenring des ersten Lagers in Richtung des profilierten Bereichs des Rotors im Gehäuse axial verschiebbar ist, und Anbringen eines zweiten Lagers an der Welle, wobei das zweite Lager eingerichtet ist, zumindest positive Axialkräfte aufzunehmen. Es ist bevorzugt, dass die Schritte in der genannten Reihenfolge durchgeführt werden. Ferner ist bevorzugt, dass das Verfahren auch an einer zweiten Welle einer zweiwelligen Drehkolbenmaschine durchführt wird.

Mit dem Verfahren kann eine Drehkolbenmaschine gemäß einer der zuvor genannten Ausgestaltungen montiert werden, oder im Rahmen des Verfahrens können einzelne Aspekte der genannten Drehkolbenmaschine zum Einsatz kommen.

Beim Anbringen des ersten Lagers an einer Welle des Rotors kann der profilierte Bereich des Rotors an einer saugseitigen Stirnseite des Innenraums des Gehäuses anliegen. Dies vereinfacht den Montagevorgang.

In einer weiteren Ausführungsform kann das Verfahren die folgenden Schritte umfassen: Bewegen der Welle derart, dass der profilierte Bereich des Rotors eine der Festlagerung zugewandte druckseitige Stirnseite des Innenraums des Gehäuses berührt und dabei Ermitteln einer Passscheibenbreite ($X_{Passscheibe}$), und Anbringen zumindest einer entsprechend der Passscheibenbreite ($X_{Passscheibe}$) ausgewählten ersten Passscheibe derart, dass eine Position eines Lagerrings des ersten Lagers eingestellt ist.

Gemäß einer Ausführungsform des Verfahrens ist es vorgesehen, dass das erste Lager ein NJ-Lager oder ein Schrägkugellager ist, und/oder das zweite Lager ein Schrägkugellager oder eine Kombination von mehreren Schrägkugellagern in Tandem-Anordnung ist. Generell erlaubt das erfindungsgemäße Verfahren eine große Variantenvielfalt von Lagerkombinationen. Ein vorheriges Paaren mit Einstellung der Lagerluft ist nicht notwendig, so dass Kostenvorteile erreicht werden können.

Ferner kann es vorgesehen sein, dass zumindest eine erste Passscheibe an der dem profilierten Bereich des Rotors abgewandten Seite des Außenringes des ersten Lagers anliegt, oder die zumindest eine erste Passscheibe einen Distanzring, der mit einem Außenring des ersten Lagers in Kontakt steht, gegenüber dem Gehäuse abstützt.

Es ist bevorzugt, dass die Passscheibenbreite ($X_{Passscheibe}$) anhand der folgenden Formel berechnet wird:

$$X_{Passscheibe} = x + DS_{min},$$

wobei x ein Maß zwischen dem Lageraußenring eines ersten Lagers und einer Anlageseite eines Distanzrings ist, und $D_{s\_min}$ das minimale Axialspiel an der Druckseite ist.

Ein Distanzring kann gegen die zumindest eine erste Passscheibe geschoben werden. Der Einsatz einer zusätzlichen Messvorrichtung ist nicht erforderlich.

Gemäß einer Ausführungsform soll eine Mutter, insbesondere Nutmutter, an der Welle aufgebracht werden, um das zweite Lager gegen das erste Lager zu positionieren, so dass sich das durch die oben beschriebene geeignete Wahl der Passscheibenbreite $x_{Passscheibe}$ eingestellte Spiel ergibt. Die Nutmutter stützt sich an der dafür vorgesehenen Wellenschulter ab, wodurch die Lagerung nicht verspannt wird.

Es ist bevorzugt, dass zwischen der Mutter und dem zweiten Lager zumindest eine zweite Passscheibe eingesetzt wird. Das Maß der zweiten Passscheibe kann dabei wie folgt berechnet werden:

$$Z_{Passscheibe} = (DS - DS_{max}) + z,$$

wobei DS das gemessene druckseitige Spiel bei der Voreinstellung ist, DSmax das einzustellende druckseitige Maximalspiel im Betriebsfall und z die Breite einer bei der Voreinstellung verwendeten Referenz-Passscheibe ist, welche zwischen dem Innenring des zweiten Lagers und einer Wellenmutter angeordnet wird.

Eine Variante ist, dass die Positionen von Innenringen des ersten und zweiten Lagers mit zumindest einer Passscheibe zueinander eingestellt werden.

**Kurze Beschreibung der Zeichnungen**

Fig. 1    zeigt in einer Teilschnittansicht eine Festlagerung einer Drehkolbenmaschine gemäß einer ersten Ausführungsform der Erfindung.

Fig. 2    zeigt in einer schematischen Ansicht einen ersten Verfahrensschritt zur Montage der Festlagerung eines Rotors einer Drehkolbenmaschine gemäß der ersten Ausführungsform.

Fig. 3    veranschaulicht einen zweiten Verfahrensschritt zur Montage der Festlagerung des Rotors der Drehkolbenmaschine gemäß der ersten Ausführungsform.

Fig. 4    veranschaulicht einen dritten Verfahrensschritt zur Montage der Festlagerung des Rotors der Drehkolbenmaschine gemäß der ersten Ausführungsform.

Fig. 5    veranschaulicht einen vierten Verfahrensschritt zur Montage der Festlagerung des Rotors der Drehkolbenmaschine gemäß der ersten Ausführungsform.

Fig. 6    veranschaulicht einen fünften Verfahrensschritt zur Montage der Festlagerung des Rotors der Drehkolbenmaschine gemäß der ersten Ausführungsform.

Fig. 7 zeigt einen sechsten Verfahrensschritt zur Montage der Festlagerung des Rotors der Drehkolbenmaschine gemäß der ersten Ausführungsform.

Fig. 8 zeigt einen siebten Verfahrensschritt zur Montage der Festlagerung des Rotors der Drehkolbenmaschine gemäß der ersten Ausführungsform.

Fig. 9 zeigt einen achten Verfahrensschritt zur Montage der Festlagerung des Rotors der Drehkolbenmaschine gemäß der ersten Ausführungsform.

Fig. 10 ist eine schematische Darstellung einer Drehkolbenmaschine gemäß einer zweiten Ausführungsform der Erfindung.

Fig. 11 ist eine schematische Darstellung einer Drehkolbenmaschine gemäß einer dritten Ausführungsform der Erfindung.

Fig. 12 ist eine schematische Darstellung einer Drehkolbenmaschine gemäß einer vierten Ausführungsform der Erfindung.

Fig. 13 ist eine schematische Darstellung einer Drehkolbenmaschine gemäß einer fünften Ausführungsform der Erfindung.

## Detaillierte Beschreibung der bevorzugten Ausführungsform

Nachfolgend werden anhand der Figuren Ausführungsformen der Drehkolbenmaschine sowie Schritte eines Verfahrens zur Montage der Festlagerung eines Rotors einer zweiwelligen Drehkolbenmaschine gezeigt. Eine Festlagerung ist dabei zur Verminderung des Einflusses der thermischen Dehnung üblicherweise auf der Druckseite des Rotors positioniert. Obwohl die Merkmale der Ausführungsformen und die Verfahrensschritte rein beispielhaft beschrieben werden, um die Erfindung anhand anschaulicher Beispiele zu erläutern, können Einzelmerkmale auch zur Spezifizierung der Erfindung herangezogen werden.

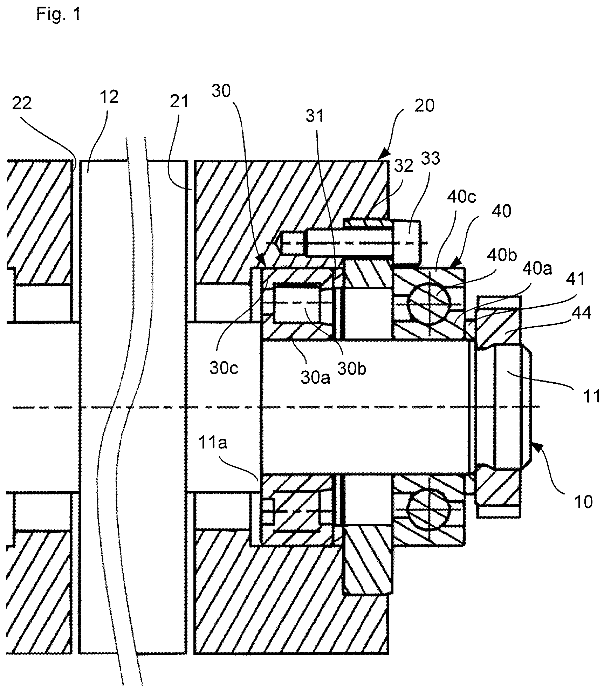

Fig. 1 zeigt eine Teilschnittansicht einer Drehkolbenmaschine gemäß einer ersten Ausführungsform der Erfindung im montierten Zustand. Eine solche Drehkolbenmaschine umfasst zwei in einem Gehäuse 20 gelagerte Rotoren (Drehkolben), wobei zur Veranschaulichung in Fig. 1 lediglich ein Rotor 10 dargestellt ist. Die Rotoren greifen derart ineinander ein, dass zwischen den Rotoren und dem Gehäuse auf der Saugseite sich vergrößernde und auf der Druckseite sich verkleinernde Förderräume ausgebildet werden. Im Betrieb kann hierdurch bei trockenlaufenden Drehkolbenmaschinen ein Druckverhältnis (Austrittsdruck zu Eintrittsdruck) von etwa 5 erreicht werden. Bei fluideingespritzten Drehkolbenmaschinen wird ein Druckverhältnis von etwa 15 erreicht.

Der Rotor 10 weist eine Welle 11 auf, wobei in Fig. 1 die Festlagerseite zur Lagerung der Welle 11 dargestellt ist. Die Festlagerseite befindet sich im Bereich der Druckseite der Drehkolbenmaschine. An der Welle 11 ist ein profilierter Bereich 12 vorgesehen, der als schrägverzahntes Element ausgebildet ist, und eingerichtet ist, mit einem (nicht dargestellten) profilierten Bereich des zweiten Rotors der Drehkolbenmaschine zu kämmen.

Die Festlagerseite des Rotors 10 umfasst ein erstes Lager 30 (Negativlager), das als NJ-Lager ausgebildet ist und gegen einen Absatz 11a der Welle 11 anliegt. Das erste Lager 30 umfasst einen Innenring 30a, zylindrische Wälzkörper 30b sowie einen Außenring 30c. Am Außenring 30c des ersten Lagers 30 liegt eine erste Passscheibe 31 an, wobei ersichtlich ist, dass anstelle einer einzelnen Passscheibe auch mehrere Passscheiben vorgesehen sein können.

Ein äußerer Distanzring 32 ist mittels Schrauben 33 am Gehäuse 20 gehalten. Der Distanzring 32 liegt an einer vom ersten Lager 30 abgewandten Seite der ersten Passscheibe 31 an.

An der von der Passscheibe 31 abgewandten Seite des Distanzrings 32 ist ein zweites Lager 40 (Positivlager) vorgesehen, das als Schrägkugellager ausgebildet ist und einen Innenring 40a, Wälzkörper 40b sowie einen Außenring 40c umfasst. Der Außenring 40c des zweiten Lagers 40 liegt am Distanzring 32 an, wohingegen zwischen dem Innenring 40a des zweiten Lagers 40 und dem Distanzring 32 kein Kontakt besteht.

Am Innenring 40a des zweiten Lagers 40 liegt an einer zum Distanzring 32 entgegengesetzten Seite eine zweite Passscheibe 41 an, wobei ersichtlich ist, dass anstelle einer einzelnen Passscheibe auch mehrere Passscheiben vorgesehen sein können. Die zweite Passscheibe 41 wird mittels einer an der Welle 11 befestigten Mutter 44 gegen den Innenring 40a des zweiten Lagers 40 gedrückt.

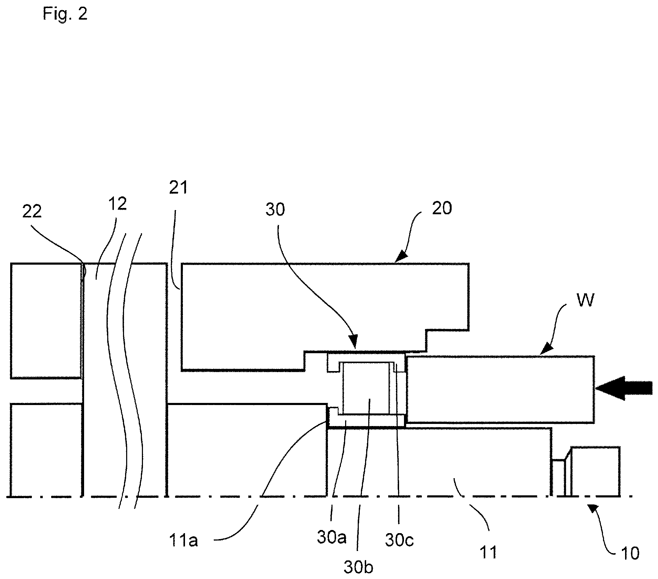

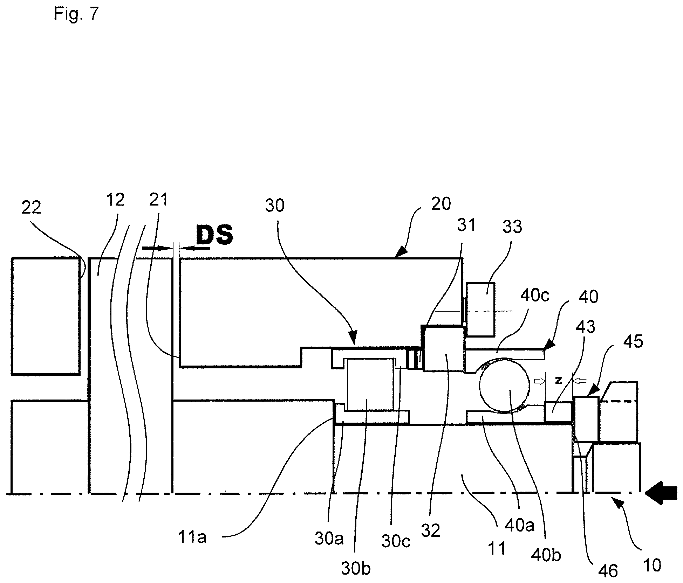

Nachfolgend wird anhand der Figuren 2-9 ein beispielhaftes Verfahren zur Montage der Festlagerseite des Rotors 10 der Drehkolbenmaschine gemäß der ersten Ausführungsform im Gehäuse 20 beschrieben.

Nachdem der Rotor 10 umfassend die Welle 11 und den profilierten Bereich 12 im Gehäuse 20 vormontiert wurde, wird zur Montage der Festlagerseite zunächst das erste Lager 30 befestigt. Hierzu wird der profilierte Bereich 12 des Rotors 10 gegen die axiale Saugseite 22 des Innenraums geführt, und das erste Lager 30 mit einem Werkzeug W auf die Welle 11 aufgebracht und dabei in die Lagerbohrung des Gehäuses 20 eingebracht, bis das erste Lager 30 gegen einen Absatz 11a der Welle 11 anliegt (Fig. 2).

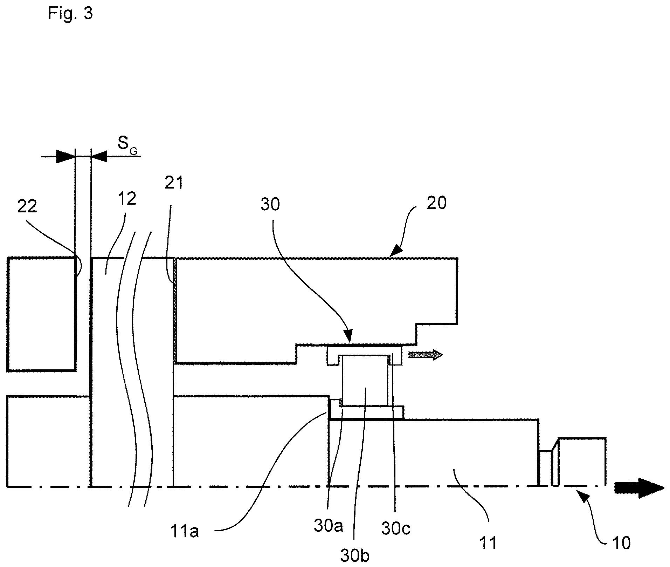

In einem nachfolgenden Verfahrensschritt wird der profilierte Bereich 12 gegen die axiale Druckseite 21 des Innenraums des Gehäuses 20 bewegt. Hierbei wird der Außenring 30c des ersten Lagers 30 entsprechend der Bewegung des Rotors 10 verschoben (Fig. 3). Dabei findet die Verschiebung des Außenrings des ersten Lagers 30 um den gesamten vorhandenen axialen Rotorspalt $S_G$ statt.

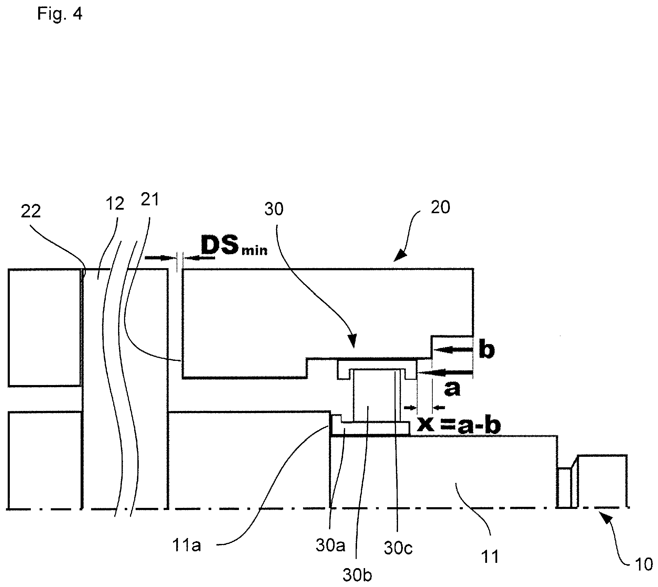

Im nächsten Schritt wird die Passscheibenbreite $X_{Passscheibe}$ zur Einstellung des minimalen druckseitigen Axialspaltes relativ zur Druckseite 21 des Gehäuses 20 ermittelt (Fig.4). Bei Durchführung der Messung ist die Position des Rotors 10 unerheblich, da der Außenring 30c des ersten Lagers 30 in der im vorangegangenen Schritt verschobenen Position verbleibt. Der Lageraußenring 30c behält seine Position bei, da die Passung zwischen dem Lageraußenring 30c und der zugehörigen Lagerbohrung im Gehäuse 20 geeignet eng ausgeführt wird. Die Ermittlung der Passscheibenbreite wird über die folgende Formel durchgeführt:

$$X_{Passscheibe} = x + DS_{\_min},$$

wobei x ein Maß zwischen einer Anlageseite des nachfolgend aufzubringenden Distanzrings 32 und der dem Förderraum abgewandten Seite des Lageraußenrings 30c ist. Es wird als Differenz der beiden Maße a und b ermittelt, wobei a und b von einer gemeinsamen Referenzebene ausgehend gemessen werden. Das minimale druckseitige Axialspiel $DS_{\_min}$ wird dabei vom Konstrukteur festgelegt.

Nachfolgend wird die erste Passscheibe 31 (oder ggf. mehrere erste Passscheiben) montiert, wobei die Passscheibe 31 entsprechend der Passscheibenbreite $X_{Passscheibe}$ ausgelegt ist.

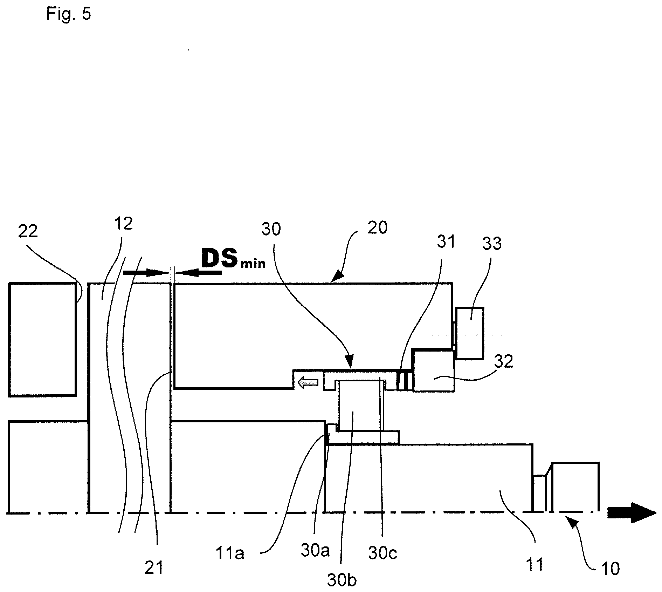

Danach wird der Distanzring 32 eingesetzt und mittels der Schrauben 33 am Gehäuse befestigt (Fig.5). Da der Außenring 30c axial verschiebbar ist, wird durch das Anziehen der Schrauben 33 am Distanzring 32 der Außenring 30c des ersten Lagers 30 bis zum Anschlag des Distanzring 32 am Gehäuse in Richtung des Förderraums verschoben. Der Verschiebeweg entspricht dem Maß $DS_{\_min}$. Die zum profilierten Bereich 12 weisende Seite des Außenrings 30c liegt auch nach dem Verschieben nicht am Gehäuse 20 an.

Die axiale Verschiebbarkeit des Außenrings bedingt, dass der Außenring des ersten Lagers 30 in Richtung des profilierten Bereiches 12 des Rotors nicht durch einen festen Anschlag, wie zum Beispiel eine Gehäusekante, definiert wird, sondern durch die aus der Passung des Außenrings 30c resultierenden Kräfte in Position gehalten wird. Alternativ oder zusätzlich wäre es möglich, den Außenring des ersten Lagers 30 durch ein an der in Richtung des profilierten Bereichs 12 des Rotors weisenden Seite des Außenrings 30 angeordneten elastisches Elements, wie zum Beispiel einer Wellfeder, in Position zu halten.

Nachfolgend kann beispielsweise eine Überprüfung des druckseitigen, minimalen Axialspiels $DS_{\_min}$ durch Bewegen des Rotors in Richtung der Druckseite 21 des Förderraums stattfinden.

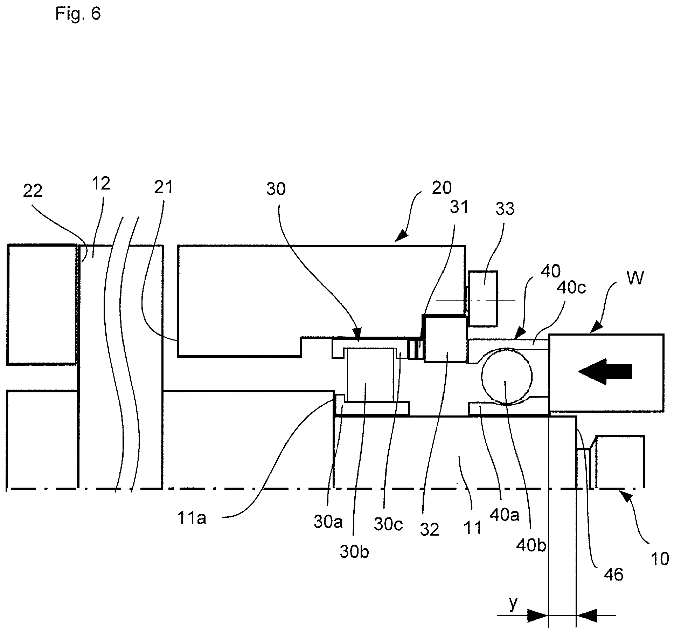

Nachfolgend wird das zweite Lager 40 (Positivlager) auf die Welle 11 aufgebracht (Fig.6). Hierzu kann beispielsweise wiederum das Werkzeug W verwendet werden. Durch den Montagevorgang des zweiten Lagers 40 wird der Rotor 10 in Richtung der Saugseite 22 verschoben, bis der profilierte Bereich 12 des Rotors 10 mit der Saugseite 22 in Kontakt kommt. Das Maß y zwischen einem Wellenabsatz 46 und der Schulter des Lagerrings 40a wird ermittelt.

Eine Referenz-Passscheibe 43 mit der Dicke z wird gewählt, wobei z größer sein muss als y und gleichzeitig kleiner als die Summe von y und dem gesamten vorhandenen axialen Rotorspalt $S_G$, vermindert um das bereits eingestellte druckseitige minimale Axialspiel $DS_{min}$. Somit gilt für z die folgende Formel:

$$y < z < (y + S_G - DS_{min}).$$

Im nächsten Schritt wird hinter dem Lagerinnenring 40a des Positivlagers 40 temporär die Referenz-Passscheibe 43 mit dem ermittelten Maß z eingesetzt und mittels Nutmutter 44 oder Nutmutter 44 und einem Distanzring 45 (wie in der dargestellten Ausführungsform) fixiert.

Durch das Festziehen der Nutmutter 44 wird der Lagerinnenring 40a weiter auf der Welle 11 geschoben und damit der Rotor Richtung Druckseite bewegt. Die sich ergebene druckseitige Spaltweite DS zwischen profiliertem Bereich 12 des Rotors 10 und Druckseite 21 wird ermittelt.

Hierbei ist zu beachten, dass während dieser und aller folgenden Messungen ein realer Betrieb der Maschine (Betrieb mit Verdichtung und daraus resultierender Axialkraft) "simuliert" wird, indem der profilierte Bereich 12 in Richtung der Saugseite 22 gedrückt wird.

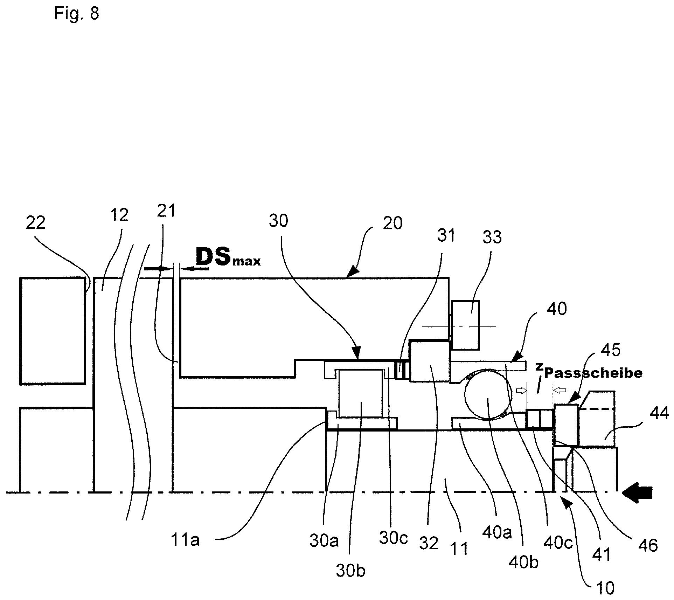

Um das vom Konstrukteur festgelegte Maß $DS_{max}$ einzustellen, wird nun die temporäre Passscheibe 43 entfernt (Fig. 8) und durch eine oder mehrere Passscheiben 41 ersetzt, wobei das dafür benötigte Maß wie folgt berechnet wird:

$$Z_{Passscheibe} = (DS - DS_{max}) + z$$

Durch endgültiges Anziehen der Mutter 44 ergibt sich nun das druckseitige Maximalspiel $DS_{max}$. Nachfolgend kann das Maß $DS_{max}$ im Betriebsfall überprüft werden, indem der Rotor 10 in Richtung der Saugseite 21 des Förderraums gedrückt wird.

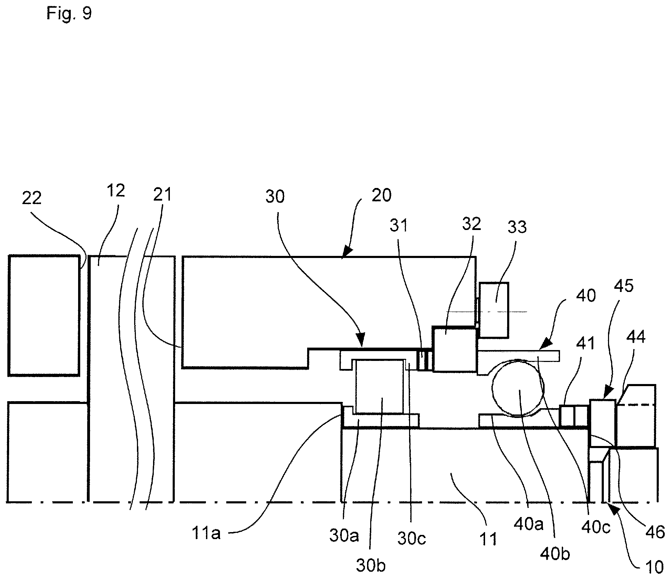

In Fig. 9 wird die Drehkolbenmaschine in einer schematischen Teilansicht im montierten Zustand dargestellt.

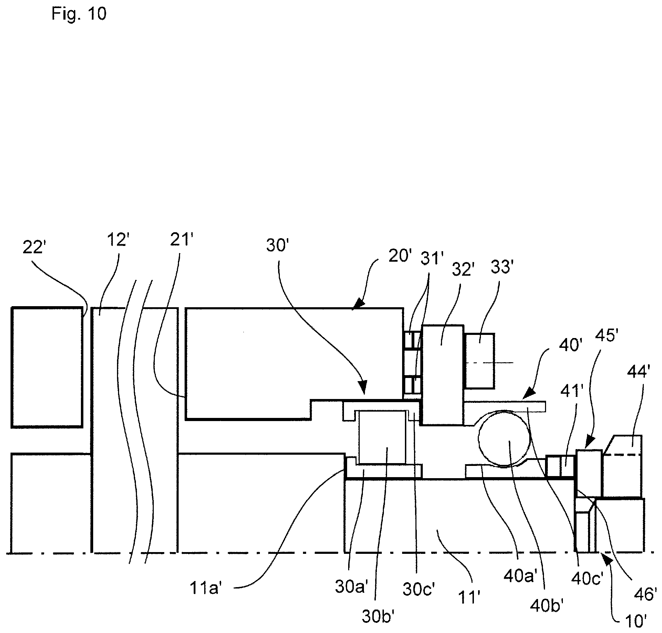

Fig. 10 zeigt eine schematische Ansicht einer zweiten Ausführungsform, wobei sich die Festlagerseite von derjenigen der ersten Ausführungsform darin unterscheidet, dass ein Distanzring 32' der zweiten Ausführungsform mittels erster Passscheiben 31' (Passunterlegscheiben für Schrauben 33') gegenüber einer Außenseite des Gehäuses 20' abgestützt ist.

Die übrigen Elemente entsprechen im Wesentlichen derjenigen der ersten Ausführungsform.

Insbesondere umfasst die Drehkolbenmaschine gemäß der zweiten Ausführungsform ein Gehäuse 20', das einen Rotor 10' aufnimmt. Der Rotor 10' weist eine Welle 11' sowie einen profilierten Bereich 12' auf. Die Festlagerseite des Rotors 10' umfasst ein erstes Lager 30' (Negativlager), das als NJ-Lager ausgebildet ist und gegen einen Absatz 11a' der Welle 11' anliegt. Das erste Lager 30' weist einen Innenring 30a', zylindrische Wälzkörper 30b' sowie einen Außenring 30c' auf. Wie auch bei der ersten Ausführungsform ist der Außenring 30c' axial verschiebbar. Am Außenring 30c' des ersten Lagers 30' liegt ein Distanzring 32' an. Zwischen Distanzring 32' und Gehäuse 20' ist eine Passscheibe 31' (oder mehrere erste Passscheiben 31') vorgesehen.

An der von der Passscheibe 31' abgewandten Seite des Distanzrings 32' ist ein zweites Lager 40' (Positivlager) vorgesehen, das als Schrägkugellager ausgebildet ist und einen Innenring 40a', Wälzkörper 40b' sowie einen Außenring 40c' umfasst. Der Außenring 40c' des zweiten Lagers 40' liegt am Distanzring 32' an, wohingegen zwischen dem Innenring 40a' des zweiten Lagers 40' und dem Distanzring 32' kein Kontakt besteht.

Am Innenring 40a' des zweiten Lagers 40' liegt an einer zum Distanzring 32' entgegengesetzten Seite eine zweite Passscheibe 41' (oder mehrere zweite Passscheiben) an. Die zweite Passscheibe 41' wird mittels einer an der Welle 11' befestigten Nutmutter 44' oder Nutmutter 44' und Distanzring 45' zwischen dem Innenring 40a' des zweiten Lagers 40' und der Nutmutter fixiert.

Die Montage der Festlagerseite der Drehkolbenmaschine erfolgt in ähnlicher Weise wie diejenige der ersten Ausführungsform.

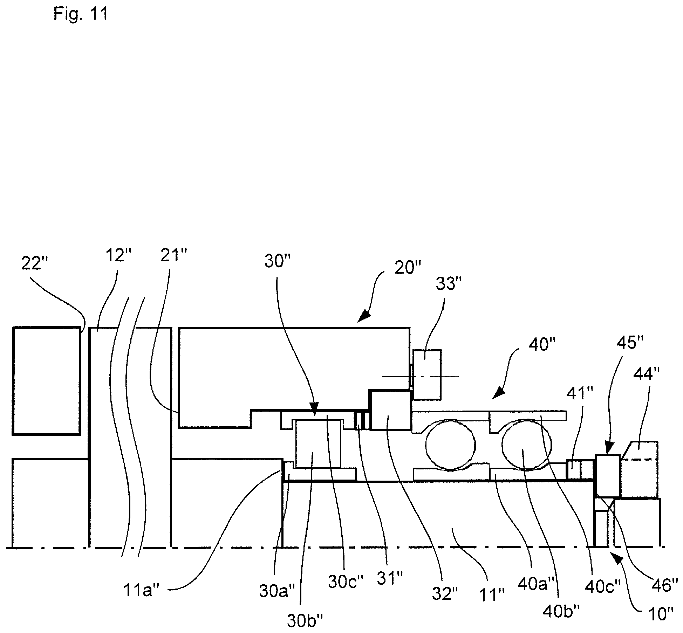

In Fig. 11 ist eine schematische Ansicht einer dritten Ausführungsform dargestellt. Die dritte Ausführungsform unterscheidet sich an der Festlagerseite von derjenigen der ersten Ausführungsform darin, dass anstelle des zweiten Lagers der ersten Ausführungsform zwei Schrägkugellager in Tandem-Anordnung 40" vorgesehen sind. Die übrigen Elemente der dritten Ausführungsform sind mit ähnlichen Bezugszeichen wie in der ersten Ausführungsform gekennzeichnet. Die dritte Ausführungsform zeichnet sich insbesondere dadurch aus, hohe Positivkräfte aufnehmen zu können.

Insbesondere umfasst die Drehkolbenmaschine gemäß der dritten Ausführungsform ein Gehäuse 20", das einen Rotor 10" aufnimmt. Der Rotor 10" weist eine Welle 11" sowie einen profilierten Bereich 12" auf. Die Festlagerseite des Rotors 10" umfasst ein erstes Lager 30" (Negativlager), das als NJ-Lager ausgebildet ist und gegen einen Absatz 11a" der Welle 11" anliegt. Das erste Lager 30" weist einen Innenring 30a", zylindrische Wälzkörper 30b" sowie einen Außenring 30c" auf. Wie auch bei der ersten Ausführungsform ist der Außenring 30c" axial verschiebbar. Am Außenring 30c" des ersten Lagers 30' liegt eine erste Passscheibe 31" (oder mehrere erste Passscheiben) an. Der Distanzring 32" liegt an einer vom ersten Lager 30" abgewandten Seite der ersten Passscheibe 31" an.

An der von der ersten Passscheibe 31" abgewandten Seite des Distanzrings 32" ist ein zweites Lager 40" (Positivlager; Schrägkugellager in Tandem-Anordnung) vorgesehen. Jeder der Lagerringe des zweiten Lagers 40" umfasst einen Innenring 40a", Wälzkörper 40b" sowie einen Außenring 40c". Der Außenring 40c" des zweiten Lagers 40" liegt am Distanzring 32" an, wohingegen zwischen dem Innenring 40a" des zweiten Lagers 40" und dem Distanzring 32" kein Kontakt besteht.

Am Innenring 40a" des zweiten Lagers 40" liegt an einer zum Distanzring 32" entgegengesetzten Seite eine zweite Passscheibe 41" (oder mehrere zweite Passscheiben) an. Die zweite Passscheibe 41" wird mittels einer an der Welle 11" befestigten Mutter (Nutmutter) 44" oder Nutmutter 44" und Distanzring 45" zwischen dem Innenring 40a" des zweiten Lagers 40" und der Nutmutter fixiert, wobei die Nutmutter 44" an der Wellenschulter 46" anliegt.

Die Montage der Festlagerseite der Drehkolbenmaschine erfolgt in ähnlicher Weise wie diejenige der ersten Ausführungsform.

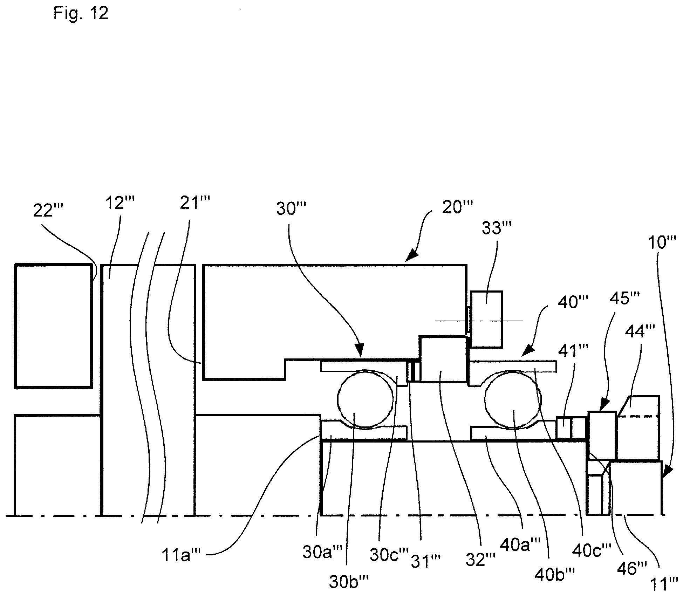

Fig. 12 ist eine schematische Ansicht einer vierten Ausführungsform. Die vierte Ausführungsform unterscheidet sich im Bereich der Festlagerseite von derjenigen der ersten Ausführungsform darin, dass anstelle des ersten Lagers der ersten Ausführungsform ein Schrägkugellager 30''' vorgesehen ist. Die übrigen Elemente der vierten Ausführungsform sind mit ähnlichen Bezugszeichen wie in der ersten Ausführungsform gekennzeichnet.

Insbesondere umfasst die Drehkolbenmaschine gemäß der vierten Ausführungsform ein Gehäuse 20''', das einen Rotor 10''' aufnimmt. Der Rotor 10''' weist eine Welle 11''' sowie einen profilierten Bereich 12''' auf. Die Festlagerseite des Rotors 10''' umfasst ein erstes Lager 30''' (Negativlager), das als Schrägkugellager ausgebildet ist und gegen einen Absatz 11a''' der Welle 11''' anliegt. Das erste Lager 30''' weist einen Innenring 30a''', kugelförmige Wälzkörper 30b''' sowie einen Außenring 30c''' auf. Wie auch bei der ersten Ausführungsform ist der Außenring 30c''' axial verschiebbar. Am Außenring 30c''' des ersten Lagers 30''' liegt eine erste Passscheibe 31''' (oder mehrere erste Passscheiben) an. Der Distanzring 32''' liegt an einer vom ersten Lager 30''' abgewandten Seite der ersten Passscheibe 31''' an.

An der von der ersten Passscheibe 31''' abgewandten Seite des Distanzrings 32''' ist ein zweites Lager 40''' (Positivlager; Schrägkugellager) vorgesehen. Das zweite Lager 40''' umfasst einen Innenring 40a''', Wälzkörper 40b''' sowie einen Außenring 40c'''. Der Außenring 40c‴ des zweiten Lagers 40‴ liegt am Distanzring 32‴ an, wohingegen zwischen dem Innenring 40a‴ des zweiten Lagers 40‴ und dem Distanzring 32‴ kein Kontakt besteht.

Am Innenring 40a‴ des zweiten Lagers 40‴ liegt an einer zum Distanzring 32‴ entgegengesetzten Seite eine zweite Passscheibe 41‴ (oder mehrere zweite Passscheiben) an. Die zweite Passscheibe 41‴ wird mittels einer an der Welle 11‴ befestigten Mutter (Nutmutter) 44‴ oder Nutmutter 44‴ und Distanzring 45‴ zwischen dem Innenring 40a‴ des zweiten Lagers 40‴ und der Nutmutter fixiert, wobei die Nutmutter 44‴ an der Wellenschulter 46‴ anliegt.

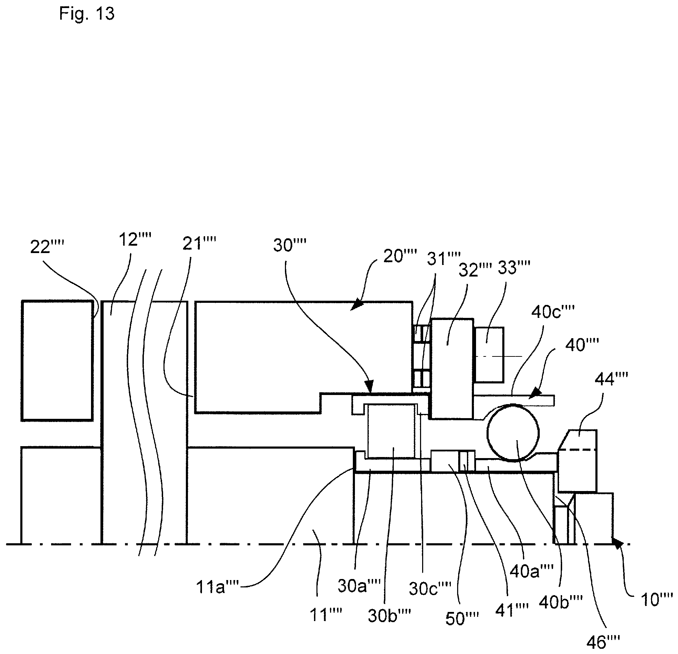

Fig. 13 ist eine schematische Ansicht einer fünften Ausführungsform. Die fünfte Ausführungsform unterscheidet sich im Bereich der Festlagerseite von den vorangegangenen Ausführungsformen darin, dass ein Distanzring 50⁗ zusammen mit einer oder mehreren Passscheibe(n) 41⁗ mit Innenringen zweier Lager an der Festlagerseite in Kontakt steht.

Die Drehkolbenmaschine gemäß der fünften Ausführungsform umfasst ein Gehäuse 20⁗, das einen Rotor 10⁗ aufnimmt. Der Rotor 10⁗ weist eine Welle 11⁗ sowie einen profilierten Bereich 12⁗ auf. Die Festlagerseite des Rotors 10⁗ umfasst ein erstes Lager 30⁗ (Negativlager), das gegen einen Absatz 11a⁗ der Welle 11⁗ anliegt.

Das erste Lager 30⁗ weist einen Innenring 30a⁗, zylindrische Wälzkörper 30b⁗ sowie einen Außenring 30c⁗ auf. Wie auch bei der ersten Ausführungsform ist der Außenring 30c⁗ axial verschiebbar. Am Außenring 30c⁗ des ersten Lagers 30⁗ liegt ein Distanzring 32" an. Zwischen Distanzring 32⁗ und Gehäuse 20⁗ ist eine Passscheibe 31⁗ (oder mehrere erste Passscheiben 31") vorgesehen.

An der von der Passscheibe 31⁗ abgewandten Seite des Distanzrings 32⁗ ist ein zweites Lager 40⁗ (Positivlager) vorgesehen, das als Schrägkugellager ausgebildet ist und einen Innenring 40a⁗, Wälzkörper 40b⁗ sowie einen Außenring 40c⁗ umfasst. Der Außenring 40c⁗ des zweiten Lagers 40⁗ liegt am Distanzring 32⁗ an.

Zwischen dem Innenring 30a⁗ des ersten Lagers 30⁗ und dem Innenring 40a⁗ des zweiten Lagers 40⁗ ist eine Baugruppe aus einem Distanzring 50⁗ sowie einer Passscheibe 41⁗ (oder mehrere Passscheiben) vorgesehen und mit dem Innenring 30a⁗ und dem Innenring 40a⁗ in Kontakt.

Der Innenring 40a⁗ des zweiten Lagers 40⁗ wird mittels einer an der Welle 11⁗ befestigten Nutmutter 44⁗ fixiert. Die Nutmutter 44⁗ ist nicht mit der Wellenschulter 46⁗ in Kontakt.

Die Montage der Festlagerseite der Drehkolbenmaschine erfolgt in ähnlicher Weise wie diejenige der ersten Ausführungsform.

**Patentansprüche**

1. Drehkolbenmaschine, umfassend:

   zwei in einem Gehäuse (20-20⁗) gegenläufig kämmende, für einen berührungsfreien Lauf angeordnete Rotoren (10-10⁗), wobei die Rotoren (10-10⁗) jeweils eine mittels Wälzlageranordnungen gelagerte Welle (11-11⁗) aufweisen, von denen jeweils eine Wälzlageranordnung als Festlageranordnung ausgebildet ist, wobei das Gehäuse (20-20⁗) einen Innenraum zur Aufnahme eines profilierten Bereichs (12-12⁗) der Rotoren (10-10⁗) aufweist, und zumindest eine der Festlageranordnungen ein erstes Lager (30-30⁗) und ein zweites Lager (40-40⁗) umfasst,
   wobei das erste Lager (30-30⁗) eingerichtet ist, zumindest Radialkräfte und negative Axialkräfte aufzunehmen, und
   das zweite Lager (40-40⁗) eingerichtet ist, zumindest positive Axialkräfte aufzunehmen, **dadurch gekennzeichnet, dass** ein Außenring des ersten Lagers (40-40⁗) in Richtung des profilierten Bereichs (12-12⁗) des Rotors (10-10⁗) im Gehäuse (20-20⁗) axial verschiebbar ist.

2. Drehkolbenmaschine gemäß Anspruch 1, ferner umfassend zumindest eine erste Passscheibe (31-31⁗) zur Definition einer Passscheibenbreite ($X_{Passscheibe}$), wobei die Passscheibenbreite ($X_{Passscheibe}$) derart gewählt ist, dass eine Position des Außenrings des ersten Lagers (30-30⁗) eingestellt ist,

   wobei bevorzugt ist, dass
   die zumindest eine erste Passscheibe (31, 31"-31‴) an einen Außenring (30c, 30c"-30c‴) des ersten Lagers (30-30‴) anliegt, oder die zumindest eine erste Passscheibe (31', 31⁗) einen Distanzring (32'), der mit einem Außenring (30c', 31c⁗) des ersten Lagers (30', 30⁗) in Kontakt steht, gegenüber dem Gehäuse (20', 20⁗) abstützt.

3. Drehkolbenmaschine gemäß Anspruch 2, **dadurch gekennzeichnet, dass** ein Distanzring (32-32⁗) gegen die zumindest eine erste Passscheibe (31-31⁗) geschoben ist.

4. Drehkolbenmaschine gemäß Anspruch 1, wobei zumindest eine Passscheibe (41⁗) zwischen Innenringen des ersten Lagers (30⁗) und des zweiten Lagers (40⁗) angeordnet ist.

5. Drehkolbenmaschine gemäß einem der vorangegangenen Ansprüche, **dadurch gekennzeichnet,**

**dass** eine Mutter (44-44‴′) an der Welle (11-11‴′) aufgebracht ist, um die Lageranordnung auf der Welle axial zu fixieren.

6. Drehkolbenmaschine gemäß einem der vorangegangenen Ansprüche, **dadurch gekennzeichnet, dass** das erste Lager ein NJ-Lager oder ein Schrägkugellager ist, und/oder das zweite Lager ein Schrägkugellager oder eine Kombination von mehreren Schrägkugellagern in Tandem-Anordnung ist, und/oder das zweite Lager (40") mehrere Einzellager umfasst.

7. Drehkolbenmaschine gemäß einem der vorangegangenen Ansprüche, **dadurch gekennzeichnet, dass** das erste Lager (30-30‴′) näher am profilierten Bereich des Rotors angeordnet ist als das zweite Lager (40-40‴′).

8. Drehkolbenmaschine gemäß einem der vorangegangenen Ansprüche, wobei sich die Außenringe des ersten und zweiten Lagers (30-30‴; 40-40‴), bevorzugt mittels eines oder mehrerer Zwischenelemente, axial in Kontakt befinden, und sich Innenringe des ersten und zweiten Lagers (30-30‴; 40-40‴) nicht axial in Kontakt befinden oder über mindestens ein elastisches Zwischenelement, insbesondere eine Wellfeder, in Kontakt befinden.

9. Verfahren zur Montage eines Rotors (10-10‴′) einer zweiwelligen Drehkolbenmaschine, wobei die Drehkolbenmaschine ein Gehäuse (20-20‴′) mit einem Innenraum zur Aufnahme eines profilierten Bereichs (12-12‴′) des Rotors (10-10‴′) aufweist, umfassend die Schritte:

> Anbringen eines ersten Lagers (30-30‴′) an einer Welle (11-11‴′) des Rotors (10-10‴′), wobei das erste Lager (30-30‴) in eine definierte Position,
> insbesondere gegen einen Absatz (11a-11a‴′) der Welle (11-11‴′), geschoben wird,
> wobei das erste Lager (30-30‴′) eingerichtet ist, im Betriebsfall Radialkräfte sowie negative Axialkräfte aufzunehmen, und ein Außenring des ersten Lagers (40-40‴′) im Betriebsfall in Richtung des profilierten Bereichs (12-12‴′) des Rotors (10-10‴′) im Gehäuse (20-20‴′) axial verschiebbar ist,
> Anbringen eines zweiten Lagers (40-40‴′) an der Welle (11-11‴′), wobei das zweite Lager (40-40‴′) eingerichtet ist, zumindest positive Axialkräfte aufzunehmen.

10. Verfahren gemäß Anspruch 9, umfassend die Schritte:

> Bewegen der Welle (11-11‴′) derart, dass der

profilierte Bereich (12-12‴′) des Rotors (10-10‴′) eine der Festlagerung zugewandte Stirnseite (21-21‴′) des Innenraums des Gehäuses (20-20‴′) berührt und dabei Ermitteln einer Passscheibenbreite $X_{Passscheibe}$), und Anbringen zumindest einer entsprechend der Passscheibenbreite ($X_{Passscheibe}$) ausgewählten ersten Passscheibe (31-31‴′) derart, dass eine Position eines Lagerrings des ersten Lagers (30-30‴′) eingestellt ist, wobei bevorzugt ist, dass die zumindest eine erste Passscheibe (31, 31"-31‴′) an der dem profilierten Bereich des Rotors abgewandten Seite des Außenringes (30c, 30c"-30c‴) des ersten Lagers (30-30‴) anliegt, oder die zumindest eine erste Passscheibe (31′, 31‴′) einen Distanzring (32′, 32‴′), der mit einem Außenring (30c′, 30c‴′) des ersten Lagers (30′, 30‴′) in Kontakt steht, gegenüber dem Gehäuse (20′, 20‴′) abstützt.

11. Verfahren gemäß Anspruch 10, **dadurch gekennzeichnet, dass** die Passscheibenbreite ($X_{Passscheibe}$) anhand der folgenden Formel berechnet wird:

$$X_{Passscheibe} = x + DS_{min},$$

wobei x ein Maß zwischen einer Anlageseite eines Distanzrings (32-32‴′) und der dem Förderraum abgewandten Seite des Lageraußenrings (30c) ist, und $DS_{min}$ das minimale Axialspiel an der Druckseite ist.

12. Verfahren gemäß einem der Ansprüche 9-11, **dadurch gekennzeichnet, dass** ein Distanzring (32-32‴′) gegen die zumindest eine erste Passscheibe (31-31‴′) geschoben wird.

13. Verfahren gemäß einem der Ansprüche 9-12, **dadurch gekennzeichnet, dass**

> zwischen einer Mutter und dem zweiten Lager (40-40‴′) zumindest eine zweite Passscheibe (41-41‴′) eingesetzt wird, wobei bevorzugt ist, dass sich das Maß der zweiten Passscheibe (41-41‴′) wie folgt berechnet:

$$Z_{Passscheibe} = (DS - DS_{max}) + z,$$

wobei DS das gemessene druckseitige Spiel bei der Voreinstellung ist, $DS_{max}$ das einzustellende druckseitige Maximalspiel im Betriebsfall und z die Breite einer bei der Voreinstellung verwendeten Referenz-Passscheibe ist, welche zwischen dem Innenring des zweiten Lagers (40-40‴′) und einer Wellenmutter (44-44‴′) angeordnet ist.

**14.** Verfahren gemäß einem der Ansprüche 9-13, **dadurch gekennzeichnet, dass** beim Anbringen des ersten Lagers (30-30'''') an einer Welle (11-11'''') des Rotors (10-10'''') der profilierte Bereich (12-12'''') des Rotors an einer saugseitigen Stirnseite (22-22'''') des Innenraums des Gehäuses (20-20'''') anliegt.

**15.** Verfahren gemäß einem der Ansprüche 9-14, **dadurch gekennzeichnet, dass** die Positionen von Innenringen des ersten und zweiten Lagers mit zumindest einer Passscheibe (41'''') zueinander eingestellt werden.

**Claims**

**1.** Rotary piston machine, comprising

two rotors (10-10'''') meshing in opposite directions in a housing (20-20'''') and arranged for contact-free running, wherein the rotors (10-10'''') each have a shaft (11-11'''') mounted by means of rolling bearing arrangements, of which one rolling bearing arrangement is designed as a fixed bearing arrangement in each case, wherein

the housing (20-20'''') has an interior space for accommodating a profiled region (12-12'''') of the rotors (10-10''''), and

at least one of the fixed bearing arrangements comprises a first bearing (30-30'''') and a second bearing (40-40''''),

wherein the first bearing (30-30'''') is set up to receive at least radial forces and negative axial forces, and

the second bearing (40-40'''') is set up to absorb at least positive axial forces,

**characterised in** such a way that an outer ring of the first bearing (40-40'''') is axially displaceable in the direction of the profiled region (12-12'''') of the rotor (10-10'''') in the housing (20-20'''').

**2.** A rotary piston machine according to claim 1, further comprising at least a first shim washer (31-31'''') for defining a shim washer width ($X_{shim}$), wherein the shim washer width ($X_{shim}$) is selected such a way that a position of the outer ring of the first bearing (30-30'''') is set,

wherein it is preferred that
the at least first shim washer (31, 31"-31''') bears against an outer ring (30c, 30c''-30c''') of the first bearing (30-30''''), or the at least one first shim washer (31', 31'''') supports a spacer ring (32'), which is in contact with an outer ring (30c', 31c'''') of the first bearing (30', 30''''), with respect to the housing (20', 20'''').

**3.** Rotary piston machine according to claim 2, **characterised in** such a way that a spacer ring (32-32'''') is pushed against the at least one first shim washer (31-31'''').

**4.** Rotary piston machine according to claim 1, wherein at least one shim washer (41'''') is arranged between inner rings of the first bearing (30'''') and the second bearing (40'''').

**5.** Rotary piston machine according to one of the preceding claims, **characterised in** such a way that a nut (44-44'''') is mounted on the shaft (11-11'''') in order to axially fix the bearing arrangement on the shaft.

**6.** Rotary piston machine according to one of the preceding claims, **characterised in** such a way that the first bearing is an NJ bearing or an angular contact ball bearing, and/or

the second bearing is an angular contact ball bearing or a combination of several angular contact ball bearings in a tandem arrangement, and/or
the second bearing (40'') comprises several individual bearings.

**7.** Rotary piston machine according to one of the preceding claims, **characterised in** such a way that the first bearing (30-30'''') is arranged closer to the profiled region of the rotor than the second bearing (40-40'''').

**8.** Rotary piston machine according to one of the preceding claims, wherein the outer rings of the first and second bearings (30-30'''; 40-40''') are in axial contact, preferably by means of one or more intermediate elements, and inner rings of the first and second bearings (30-30'''; 40-40''') are not in axial contact or are in contact via at least one elastic intermediate element, in particular a wave spring.

**9.** A method of mounting a rotor (10-10'''') of a twin-shaft rotary engine, the rotary engine having a housing (20-20'''') with an interior for receiving a profiled portion (12-12'''') of the rotor (10-10''''), comprising the steps of:

attaching a first bearing (30-30'''') to a shaft (11-11'''') of the rotor (10-10''''), wherein the first bearing (30-30''') is pushed into a defined position, in particular against a shoulder (11a-11a'''') of the shaft (11-11''''), the first bearing (30-30'''') being set up to absorb radial forces and negative axial forces during operation, and an outer ring of the first bearing (40-40'''') being axially displaceable in the direction of the profiled region (12-12⁗) of the rotor (10-10⁗) in the housing (20-20⁗) during operation,

attaching a second bearing (40-40⁗) to the shaft (11-11⁗), wherein the second bearing (40-40⁗) is set up to absorb at least positive axial forces.

10. A method according to claim 9, comprising the steps of:

moving the shaft (11-11⁗) such that the profiled portion (12-12⁗) of the rotor (10-10⁗) contacts an end face (21-21⁗) of the inner space of the housing (20-20⁗) facing the fixed bearing, thereby determining a shim washer width ($X_{shim}$ washer), and

attaching at least one first shim washer (31-31⁗) selected in accordance with the shim washer width ($X_{shim}$ washer) in such a way that a position of a bearing ring of the first bearing (30-30⁗) is set,

wherein it is preferred

that the at least one first shim washer (31, 31"-31‴) bears against the side of the outer ring (30c, 30c"-30C‴) of the first bearing (30-30‴) facing away from the profiled region of the rotor, or the at least one first shim washer (31', 31⁗) supports a spacer ring (32', 32⁗), which is in contact with an outer ring (30c', 30c⁗) of the first bearing (30', 30⁗), relative to the housing (20', 20⁗).

11. Method according to claim 10, **characterised in** such a way that the shim width ($X_{shim}$ washer) is calculated using the following formula:

$$X_{shim} = x + DS_{\_min},$$

where x is a dimension between a contact side of a spacer ring (32-32‴) and the side of the bearing outer ring 30c facing away from the conveying chamber, and $DS_{min}$ is the minimum axial clearance on the discharge side.

12. Method according to one of claims 9-11, **characterised in** such a way that a spacer ring (32-32⁗) is pushed against the at least one first shim washer (31-31⁗).

13. Method according to one of claims 9-12, **characterised in** such a way that

at least one second shim washer (41-41⁗) is inserted between a nut and the second bearing (40-40⁗), wherein it is preferred that the dimension of the second shim washer (41-41⁗) is calculated as follows:

$$Z_{shim} = (DS-DS_{max})+z,$$

where DS is the measured discharge-side clearance during presetting, $DS_{max}$ is the maximum discharge-side clearance to be set during operation and z is the width of a reference shim washer used during presetting, which is arranged between the inner ring of the second bearing (40-40⁗) and a shaft nut (44-44⁗).

14. Method according to one of claims 9-13, **characterised in** such a way that, when the first bearing (30-30⁗) is attached to a shaft (11-11⁗) of the rotor (10-10⁗), the profiled region (12-12⁗) of the rotor bears against a suction-side end face (22-22⁗) of the interior of the housing (20-20⁗).

15. Method according to one of claims 9-14, **characterised in that** the positions of inner rings of the first and second bearing are adjusted relative to one another using at least one shim washer (41⁗).

**Revendications**

1. Machine à piston rotatif, comprenant :

deux rotors (10-10"") disposés pour un fonctionnement sans contact, s'engrènant en sens opposé dans un boîtier (20-20""), dans laquelle les rotors (10-10"") présentent chacun un arbre (11-11⁗) monté au moyen d'ensembles de paliers à roulements, dont respectivement un ensemble de paliers à roulements est réalisé en tant qu'un ensemble de paliers fixes, dans laquelle

le boîtier (20-20"") présente un espace intérieur pour recevoir une zone profilée (12-12"") des rotors (10-10""), et

au moins un des ensembles de paliers fixes comprend un premier palier (30-30"") et un deuxième palier (40-40""),

dans laquelle le premier palier (30-30"") est mis au point pour recevoir au moins des forces radiales et des forces axiales négatives, et

le deuxième palier (40-40"") est mis au point pour recevoir au moins des forces axiales positives,

**caractérisée en ce qu'**une bague extérieure du premier palier (40-40"") peut être coulissée axialement dans la direction de la zone profilée (12-12"") du rotor (10-10"") dans le boîtier (20-20"").

2. Machine à piston rotatif selon la revendication 1, comprenant en outre au moins une première rondelle d'ajustage (31-31"") pour définir une largeur de rondelle d'ajustage ($X_{rondelle\ d'ajustage}$), dans laquelle la largeur de rondelle d'ajustage ($X_{\text{rondelle d'ajustage}}$) est choisie de telle manière qu'une position de la bague extérieure du premier palier (30-30''') est réglée,

dans laquelle il est préféré que l'au moins une première rondelle d'ajustage (31, 31''-31''') repose sur une bague extérieure (30c, 30c''-30c''') du premier palier (30-30'''), ou l'au moins une première rondelle d'ajustage (31', 31'''') soutient une bague d'écartement (32'), qui est en contact avec une bague extérieure (30c', 31c'''') du premier palier (30', 30''''), par rapport au boîtier (20', 20'''').

3. Machine à piston rotatif selon la revendication 2, **caractérisée en ce qu'**une bague d'écartement (32-32'''') est poussée contre l'au moins une première rondelle d'ajustage (31-31'''').

4. Machine à piston rotatif selon la revendication 1, dans laquelle au moins une rondelle d'ajustage (41''') est disposée entre des bagues intérieures du premier palier (30'''') et du deuxième palier (40'''').

5. Machine à piston rotatif selon l'une quelconque des revendications précédentes, **caractérisée en ce qu'**un écrou (44- 44'''') est installé sur l'arbre (11-11'''') pour fixer axialement l'ensemble de paliers sur l'arbre.

6. Machine à piston rotatif selon l'une quelconque des revendications précédentes, **caractérisée en ce que** le premier palier est un palier NJ ou un palier à billes à contact oblique, et/ou le deuxième palier est un palier à billes à portée oblique ou une combinaison de plusieurs paliers à billes à portée oblique dans un agencement en tandem, et/ou le deuxième palier (40'') comprend plusieurs paliers individuels.

7. Machine à piston rotatif selon l'une quelconque des revendications précédentes, **caractérisée en ce que** le premier palier (30-30'''') est disposé plus près de la zone profilée du rotor que le deuxième palier (40-40'''').

8. Machine à piston rotatif selon l'une quelconque des revendications précédentes, dans laquelle les bagues extérieures des premier et deuxième paliers (30-30''' ; 40-40'''') sont en contact axial de manière préférée au moyen d'un ou de plusieurs éléments intermédiaires et des bagues intérieures des premier et deuxième paliers (30-30''' ; 40-40'''') ne sont pas en contact axial ou sont en contact au moyen d'au moins un élément intermédiaire élastique, en particulier un ressort ondulé.

9. Procédé de montage d'un rotor (10-10'''') d'une machine à piston rotatif à deux arbres, dans lequel la machine à piston rotatif présente un boîtier (20-20'''') avec un espace intérieur pour recevoir une zone profilée (12-12'''') du rotor (10-10''''), comprenant les étapes :

de mise en place d'un premier palier (30-30'''') sur un arbre (11-11'''') du rotor (10-10''''), dans lequel le premier palier (30-30''') est poussé dans une position définie, en particulier contre un talon (11a-11a'''') de l'arbre (11-11''''), dans lequel le premier palier (30-30'''') est mis au point pour recevoir en mode de fonctionnement des forces radiales ainsi que des forces axiales négatives, et une bague extérieure du premier palier (40-40'''') en mode de fonctionnement peut être coulissée axialement en direction de la zone profilée (12-12'''') du rotor (10-10'''') dans le boîtier (20-20''''),

de mise en place d'un deuxième palier (40-40'''') sur l'arbre (11-11''''), dans lequel le deuxième palier (40-40'''') est mis au point pour recevoir au moins des forces axiales positives.

10. Procédé selon la revendication 9, comprenant les étapes :

de déplacement de l'arbre (11-11'''') de telle manière que la zone profilée (12-12'''') du rotor (10-10'''') touche un côté frontal (21-21'''') de l'espace intérieur du boîtier (20-20'''') tournée vers le palier fixe et ce faisant de détermination d'une largeur de rondelle d'ajustage ($X_{\text{rondelle d'ajustage}}$), et

de mise en place d'au moins une première rondelle d'ajustage (31-31'''') sélectionnée en fonction de la largeur de rondelle d'ajustage ($X_{\text{rondelle d'ajustage}}$) de telle manière qu'une position d'une bague de palier du premier palier (30-30'''') est réglée,

dans lequel il est préféré que l'au moins une première rondelle d'ajustage (31, 31''- 31''') repose sur le côté de la bague extérieure (30c, 30c''-30c''') du premier palier (30-30''') opposé à la zone profilée du rotor, ou l'au moins une première rondelle d'ajustage (31', 31'''') soutient une bague d'écartement (32', 32'''') qui est en contact avec une bague extérieure (30c', 30c'''') du premier palier (30', 30'''') par rapport au boîtier (20', 20'''').

11. Procédé selon la revendication 10, **caractérisé en ce que** la largeur de la rondelle d'ajustage ($X_{\text{rondelle d'ajustage}}$) est calculée à l'aide de la formule suivante :

$$X_{\text{rondelle d'ajustage}} = x + DS_{\min},$$

dans lequel x est une mesure entre un côté d'appui d'une bague d'écartement (32-32'''') et le côté de la bague extérieure de palier (30c) opposé à la chambre de refoulement, et DS $_{min}$ est le jeu axial minimal sur le côté de pression.

12. Procédé selon l'une quelconque des revendications 9 à 11, **caractérisé en ce qu'**une bague d'écartement (32-32'''') est poussée contre l'au moins une première rondelle d'ajustage (31-31'''').

13. Procédé selon l'une quelconque des revendications 9 à 12, **caractérisé en ce que** au moins une deuxième rondelle d'ajustage (41-41'''') est insérée entre un écrou et le deuxième palier (40-40''''), dans lequel il est préféré que la mesure de la deuxième rondelle d'ajustage (41-41'''') soit calculée comme suit :

$$Z_{\text{Rondelle d'ajustage}} = (DS\text{-}DS_{\,max}) + z,$$

où DS est le jeu côté pression mesuré lors du préréglage, $DS_{max}$ est le jeu maximal côté pression à régler en fonctionnement et z est la largeur d'une rondelle d'ajustage de référence utilisée lors du préréglage qui est disposée entre la bague intérieure du deuxième palier (40- 40'''') et un écrou d'arbre (44-44'''').

14. Procédé selon l'une quelconque des revendications 9 à 13, **caractérisé en ce que** lors de la mise en place du premier palier (30-30'''') sur un arbre (11-11'''') du rotor (10-10''''), la zone profilée (12-12'''') du rotor repose sur un côté frontal côté aspiration (22-22'''') de l'espace intérieur du boîtier (20-20'''').

15. Procédé selon l'une quelconque des revendications 9 à 14, **caractérisé en ce que** les positions de bagues intérieures des premier et deuxième paliers sont réglées les unes par rapport aux autres avec au moins une rondelle d'ajustage (41'''').

Fig. 1

Fig. 2

Fig. 3

Fig. 4

Fig. 5

Fig. 6

Fig. 7

Fig. 8

Fig. 9

EP 3 960 984 B1

Fig. 10

23

Fig. 11

Fig. 12

Fig. 13

**IN DER BESCHREIBUNG AUFGEFÜHRTE DOKUMENTE**

**In der Beschreibung aufgeführte Patentdokumente**

- US 4465446 A
- US 4730995 A

- EP 1845265 A1